(19) Europäisches Patentamt

European Patent Office

Office européen des brevets

(11) EP 0 799 517 B2

(12) NEUE EUROPÄISCHE PATENTSCHRIFT

(45) Veröffentlichungstag und Bekanntmachung des Hinweises auf die Entscheidung über den Einspruch:
**12.04.2006 Patentblatt 2006/15**

(45) Hinweis auf die Patenterteilung:
**29.03.2000 Patentblatt 2000/13**

(21) Anmeldenummer: **95942722.0**

(22) Anmeldetag: **21.12.1995**

(51) Int Cl.:
*H02J 5/00* (2006.01)   *H01F 38/00* (2006.01)

(86) Internationale Anmeldenummer:
**PCT/EP1995/005082**

(87) Internationale Veröffentlichungsnummer:
**WO 1996/020526 (04.07.1996 Gazette 1996/30)**

(54) **ANORDNUNG ZUR BERÜHRUNGSLOSEN INDUKTIVEN ÜBERTRAGUNG ELEKTRISCHER LEISTUNG**

DEVICE FOR THE CONTACTLESS INDUCTIVE TRANSMISSION OF ELECTRIC ENERGY

DISPOSITIF DE TRANSMISSION PAR INDUCTION SANS CONTACT D'ENERGIE ELECTRIQUE

(84) Benannte Vertragsstaaten:
**AT CH DE DK ES FR GB IT LI NL SE**

(30) Priorität: **24.12.1994 DE 4446779**

(43) Veröffentlichungstag der Anmeldung:
**08.10.1997 Patentblatt 1997/41**

(73) Patentinhaber: **DaimlerChrysler AG**
**70567 Stuttgart (DE)**

(72) Erfinder: **SEELIG, Anton**
**D-65439 Flörsheim (DE)**

(74) Vertreter: **Meier, Christof**
**Dreiss, Fuhlendorf,**
**Steimle & Becker**
**Postfach 10 37 62**
**70032 Stuttgart (DE)**

(56) Entgegenhaltungen:
**WO-A-92/17929     JP-A- 5 207 605**
**JP-A- 5 336 605     SU-A- 659 426**
**US-A- 4 833 337     US-A- 5 301 096**

EP 0 799 517 B2

**Beschreibung**

Die Erfindung betrifft eine Anordnung zur berührungslosen induktiven Übertragung elektrischer Leistung nach dem Oberbegriff des Anspruchs 1.

Die Erfindung betrifft ferner ein Verfahren zur gleichzeitigen berührungslosen Übertragung und individuell einstellbaren Leistung auf mehrere bewegte Verbraucher mit einer solchen Anordnung.

Eine solche Anordnung ist aus der SU-A-659 426 bekannt, wobei die Energie dort auf schienengebundene Waggons, magnetisch aufgehängte Waggons, Industrie- und Grubenlokomotiven übertragen werden soll. Die dazu verwendete Sekundärspule ist eine Luftspule.

Aus der JP-A-5 207 605 und der JP-A-5 336 605 sind berührungslose Energieübertragungen zu an Schienen laufenden Wagen bekannt. Dabei werden Übertragerköpfe mit einem U-förmigen Ferritkern verwendet, der einen Leiter umfasst und von einer Sekundärwicklung umfasst wird.

In der WO 92/17929 Al wird ein induktives Energieverteilungs-System beschrieben, das mittels einer Doppelleitung elektrische Energie auf einen oder mehrere bewegbare Verbraucher induktiv überträgt.

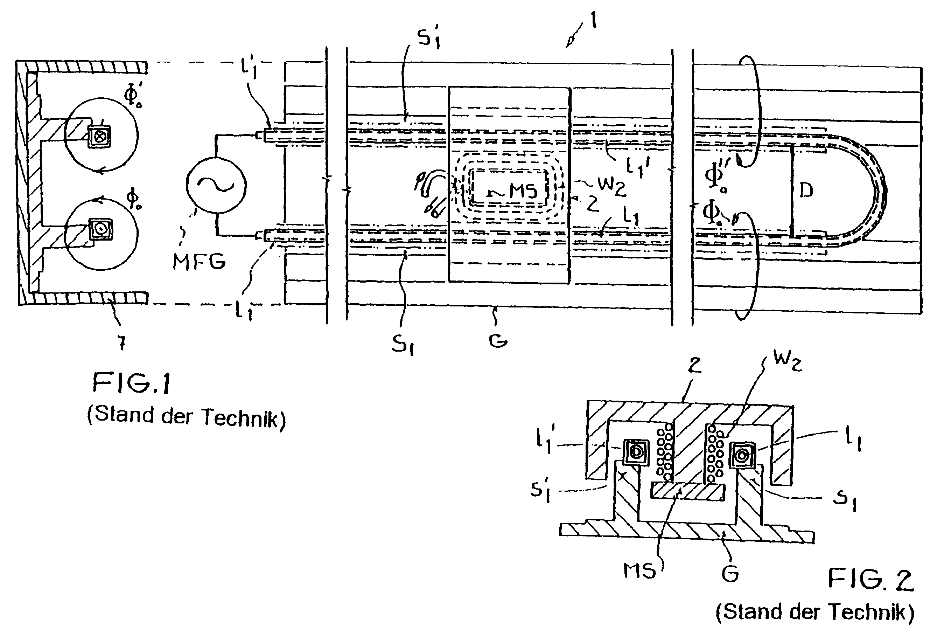

Zwischen diesen Doppelleitungen $I_1$ und $I_1$'(s. Fig. 1) werden Ferritkörper 2 bewegt, die eine Sekundärwicklung $W_2$ tragen, welche die Energie Antrieben und Verbrauchern auf den bewegten Systemen zuführt. Die Ferritkörper mit den Sekundärwicklungen werden nachfolgend auch als Übertragerköpfe bezeichnet. Die Leiter $I_1$ und $I_1$' der Doppelleitung (s. Fig. 1 und 2) sind auf Leitersttitzen S1 und S1' aus magnetisch und elektrisch nichtleitendem Material befestigt. Die Doppelleitung wird von einem E-förmigen Ferritkern 2 umgeben, dessen Mittelschenkel MS tief in den Raum zwischen den Leitern hineinragt und die Sekundärwicklung $W_2$ trägt, über die Energie abgenommen und dem bewegten Verbraucher zugeführt wird. Die dort bekannte induktive Energieübertragungsanordnung besteht im einlachsten Fall aus einem Mittelfrequenzgenerator, der eine langgestreckte Leiterschleife aus den Leitern $I_1$ und $I_1$' mit einem Strom höherer Frequenz speist, wobei die beiden Leiter eine Doppelleitung bilden.

Fig. 1 und Fig. 2 zeigen eine derartige Doppelleitung nach dem Stand der Technik mit einem bewegbaren Übertragerkopf 1 in Draufsicht und Querschnitt, der aus einem E-förmigen Ferritkern 2 mit der Sekundärwicklung $W_2$ auf dem Mittelschenkel MS besteht. Damit der Übertragerkopf oder die Übertragerköpfe möglichst klein bleiben, ist eine relativ hohe Frequenz erforderlich, die mindestens 10 KHz beträgt.

Der Übertragerkopf enthält beim Gegenstand der WO 92/17929 A1 eine Resonanzschaltung, die aus der Wicklung des Übertragerkopfs und einem parallel geschalteten Kondensator besteht. An einem Ende der Primärleitung ist ein Kondensator vorgesehen, der mit der Induktivität des Primärkreises eine Resonanzschaltung bildet. Für längere Leiteranordnungen kann am Ende der Primärleitung weitere Kapazität angeordnet sein. Die weitere Kapazität wird in Verbindung mit großen Längen der Primärleitung genannt. In diesem Fall könne die dann ebenfalls große Induktivität der Primärleitung durch in Reihe geschaltete Kapazität in einem gewissen Ausmaß verringert werden, was allerdings zusätzliche Kosten verursache und den Raumbedarf der Leitung vergrößere. Das Lehrbuch Grundgebiete der Elektrotechnik 2, 6. Auflage, R. Oldenbourg Verlag München Wien 1993 zeigt auf der Seite 144, Bild 7.125 einen R-L-C Parallelschwingkreis, bei dem eine totale Blindleistungskompensation durch eine Kapazität C erreicht werden kann, bei der Schwingkreis in Resonanz gerät.

Anordnungen mit gestreckten Leitern werden als Linienleiter- oder als Linienpolsysteme bezeichnet, weil der sich quer zur Bewegungsrichtung schließende magnetische Wechselfluß längs des Leiters stets einheitlich gerichtet ist und somit linienförmige Pole bildet. Der bewegte Übertragerkopf besteht bei Doppelleitungen meistens aus einem E-förmigen Ferritkern, der beide Leiter des Stators umschließt und den magnetischen Fluß durch die Sekundärvvicklung leitet.

Für derartige Energieübertragungen gibt es verschiedene Anwendungs-Gebiete, bei denen herkömmliche Schleifleitungen oder Schleppkabel mit Vorteilen ersetzt werden. So ist beispielsweise eine übertragung mit Schleifkontakten mit Funkenbildung, Verschleiß und Geräuschen verbunden. Bedeutende Anwendungen für die berührungslose Übertragung elektrischer Energie bestehen bei Laufkatzen von Hebezeugen, Hochregallagern oder Magnetbahnen. Auch für Fahrstühle wäre ein solches System zur Energieübertragung in die Kabine von Vorteil. Roboter, die eine bestimmte Wegstrecke abfahren müssen, um an verschiedenen Einsatzorten tätig zu sein, können ebenfalls mit einem solchen System mit Energie versorgt werden.

Bei einer Anordnung nach Fig. 1 speist der Mittelfrequenzgenerator MFG den Strom I mit einer Frequenz über 10 KHz in die aus $I_1$ und $I_1$' bestehende Leiterschleife ein. Diese Leiterschleife erzeugt Streufelder, die in Fig. 1 mit $\Phi_c$ und $\Phi_c$' bezeichnet sind.

Im vorderen Teil der Leiterschleife ist außerdem die aus $I_1$ und $I_1$' bestehende Doppelleitung durch ein Aluminiumgehäuse 7 abgeschirmt. Abschirmungen sind im wesentlichen erforderlich, um eine weitere Ausbreitung des Streufeldes $\Phi_c$ zu verhindern, da es Störungen z. B. in benachbarten Signalstromkreisen erzeugt und die elektromagnetische Verträglichkeit beeinflußt. Bei großen Leistungen kann auch die Gefahr einer Gesundheitsschädigung bestehen.

Im hinteren Teil der Fig. 1 zeigen die angedeuteten Streuflüsse $\Phi_o$ und $\Phi_c$' an, daß das Feld ohne Abschirmgehäuse wesentlich weiter in die Umgebung ausstreut.

Der größte Nachteil dieser Anordnung ist die hohe Induktivität der aus den Leitern $I_1$, $I_1$' bestehenden Doppelleitung. Neben der unbehinderten Ausbreitung der Streufelder bei nicht geschirmten Doppelleitungen ist der relativ große Abstand D der Leiter $I_1$, und $I_1$, die Hauptursache für die hohe Induktivität. Dieser Abstand D muß aber eine Mindestgröße haben, damit der Mittelschenkel MS des E-Kernes, der die Sekundärwicklung $W_2$ trägt, zwischen den Leitern I1 und I1' geführt werden kann. Dabei ist der Raumbedarf des Mittelschenkels und der Sekundärwicklung und damit auch der Abstand D durch die zu übertragende Leistung bestimmt.

Bei den hohen Übertragungsfrequenzen verursachen die Leitungs-Induktivitäten hohe induktive Spannungsabfälle, die durch einen hohen Aufwand an Kondensatoren kompensiert werden müssen.

Aus der Elektrie 34, 1980, Heft 7 ist eine Anordnung zur induktiven Energieübertragung auf Grubenlokomotiven bekannt. Bei dieser Anordnung werden Doppelleitungen verwendet, die an der Decke eines Grubenstollens verlegt sind. Zwischen diesen Doppelleitungen $I_1$, $I_1$' (s. Fig. 1) werden Ferritkörper 2 bewegt, die eine Sekundärwicklung $W_2$ tragen, welche die Energie Antrieben und Verbrauchern auf den bewegten Systemen zuführt. Die Ferritkörper mit den SekundärWicklungen werden nachfolgend auch als Übertragerköpfe bezeichnet.

In dieser Arbeit sind Verfahren zur Kompensation des induktiven Spannungsabfalls auf den Leitungen und an den Streuinduktivitäten der Übertragerköpfe durch in Reihe zur Doppelleitung und den Sekundärwicklungen geschaltete Kondensatoren beschrieben. Die Energie kann auf mindestens zwei bewegbare Verbraucher über dieselbe Doppelleitung übertragen werden.

Die Induktivität der Doppelleitung wirkt sich entscheidend auf die realisierbare Länge des Fahrwegs der bewegten Systeme aus. Für viele Anwendungen wird die Anordnung sehr aufwendig, da sie neben der Doppelleitung noch ein zusätzliches Abschirmgehäuse 7 benötigt. Die Leiter $I_1$ und $I_1$' der Doppelleitung selbst müssen, um Stromverdrängungsverluste zu vermeiden, aus einer in der Hochfrequenztechnik üblichen Hochfrequenzlitze bestehen, die aus einzelnen isolierten Einzelleitem hergestellt ist.

In der US 4,833,337 ist eine induktive Übertragungsstrecke beschrieben, welche im Primärteil eine aus zwei Leiterschleifen gebildete Wicklung aufweist Diese umschließt den beweglichen und mit einer Sekundärwicklung versehenen U-förmigen Kern. Die Primärwicklung besteht aus einem Hinleiter, der auf einer Leiterstütze zentral auf einer Schiene befestigt ist und zwei in einem Abstand von diesem befindlichen Rückleitem, welche ebenfalls auf Stützen ruhen. Die beiden äußeren Leiter sollen mit dem Kem nur einen kleinen Luftspalt bilden, damit Streumagnetfelder minimiert werden. Die Anordnung ist sehr aufwendig und erfordert zur Abschirmung einen großen Materialaufwand.

Ausgehend von der eingangs genannten SU-A-65 9 426 liegt der Erfindung die Aufgabe zugrunde, eine gegenüber der obengenannten Anordnung verbesserte Anordnung zur berührungslosen Übertragung elektrischer Leistung anzugeben.

Diese Aufgabe wird gemäß der Erfindung durch die im Kennzeichen des Anspruchs 1 aufgeführten Merkmale gelöst. Weiterbildungen der Erfindung sind in den Unteransprüchen beschrieben.

Bei der Erfindung handelt es sich um eine induktive Energieübertragung bei Mittelfrequenz auf translatorisch bewegte Transportelemente der Fördertechnik und auf mobile Arbeitsplattformen. Erfindungsgemäß weist die Leiteranordnung des Primärkreises einen als fast geschlossenes Gehäuse ausgebildeten Außenleiter und einen etwa im Zentrum des Gehäuses befindlichen Mittelleiter auf, wobei im Außenleiter ein gleich großer, entgegengesetzt gerichteter Strom ($I_1$) wie im Mittelleiter fließt. Der Vorteil liegt in einer niedrigen Induktivität auch bei großen Längen sowie im geringen Aufwand für eine Abschirmung, da die Abschirmung durch den Rückleiter selbst gebildet wird.

Das gleichzeitige, unabhängige Übertragen elektrischer Leistung zu mehreren Transportelementen auf langen Übertragungsstrecken bei Einzelleistungen bis in den 10 kW-Bereich sind wesentliche Kennzeichen dieser Anwendungen. Hierfür sind Überträgungsanordnungen erforderlich, welche die Leistung über Luftspalte bis in den cm-Bereich bei vertretbarem Aufwand und gutem Wirkungsgrad übertragen, möglichst kleine induktive Spannungsabfälle auf den Übertragungsstrekken aufweisen und bei denen ausstreuende magnetische Felder im Hinblick auf die Exposition des Menschen und die elektromagnetische Verträglichkeit unbedenklich sind. Diese Eigenschaften werden im wesentlichen durch die geometische Gestaltung der induktiven Übertragerelemente erreicht.

Ein wesentliches Element wird in der "koaxialen" Anordnung der Leiter gesehen. Der Mittelleiter ist am Ende des Fahrweges mit dem U-förmigen Außenleiter verbunden, so daß der Strom vom Mittelleiter über die Außenwandungen zurückfließt. Der Strom verteilt sich auf zwei Außenwände. Trotz der niedrigen Eindringtiefe findet der Strom einen großen Querschnitt vor. Die koaxiale Anordnung gewährleistet zum einen eine möglichst kleine Induktivität der Leitung, so daß größere Übertragungslängen möglich sind und erfüllt gleichzeitig auch die Abschirmung der Anordnung gegenüber ausstreuenden Feldern. Das Streufeld $\Phi_O$ liegt im wesentlichen nur innerhalb des Koaxialleiters und zwar im Inneren des Mittelleiters und um diesen herum.

Da das Abschirmgehäuse 7 mit der Rückleitung vereint ist, hat man einen zusätzlichen Vorteil dadurch, daß Leitermaterial eingespart wird. Man spart au-ßerdem wegen der kleineren Induktivitäten Kondensatoren zur Kompensation der induktiven Spannungsabfälle. Das begründet die niedrige Induktivität.

Die Erfindung wird nachstehend anhand der Zeichnung näher erläutert.

Dabei zeigt:

Fig. 1　　eine Anordnung zur Energieübertragung auf bewegbare Verbraucher, die über eine längere Strecke linear bewegt werden, nach dem Stand der Technik;

Fig. 2 einen Querschnitt durch die aktiven Teile des Übertragungskopfes nach dem Stand der Technik;

Fig. 3 die erfindungsgemäße Anordnung des offenen Koaxialleiters im Längsschnitt bzw. in Draufsicht;

Fig. 4 einen Querschnitt durch den koaxialen Leiter mit dem Übertragerkopf;

Fig. 5 den Querschnitt durch die Koaxialleiteranordnung an einer Stelle, an der sich im Augenblick kein bewegtes System befindet;

Fig. 6 eine besonders vorteilhafte, detaillierte Ausführungsform einer Koaxialleiteranordnung mit Übertragerkopf im Querschnitt;

Fig. 7 eine allgemeine Darstellung des erfindungsgemäßen Prinzips zur induktiven Energieübertragung auf linearbewegte Systeme;

Fig. 8 ein elektrisches Ersatzschaltbild der Übertrageranordnung nach Fig. 7;

Fig. 9 ein Zeigerdiagramm der Spannungen, Ströme und Phasenwinkel des Ersatzschaltbilds nach Fig. 8;

Fig. 10 eine Koaxialleiteranordnung mit in sich geschlossener Bahn für die endlose Bewegung mehrerer Verbraucher und einer die Ströme im Innen- und Außenleiter symmetrierenden Speiseschaltung;

Fig. 11 eine Koaxialleiteranordnung entsprechend Fig. 5 mit einem aus mehreren Windungen bestehenden Innenleiter und stromsymmetrierender Speiseschaltung;

Fig. 12 die Realisierung einer stromeinprägenden Quelle zur Speisung der Übertrageranordnungen;

Fig. 13 ein elektrisches Ersatzschaltbild der Übertrageranordnung nach den Fig. 11 und 12 mit elektronischem Verbraucherstellglied und

Fig. 14 ein Diagramm der Strom- und Spannungszeiger des Ersatzschaltbildes nach Fig. 13.

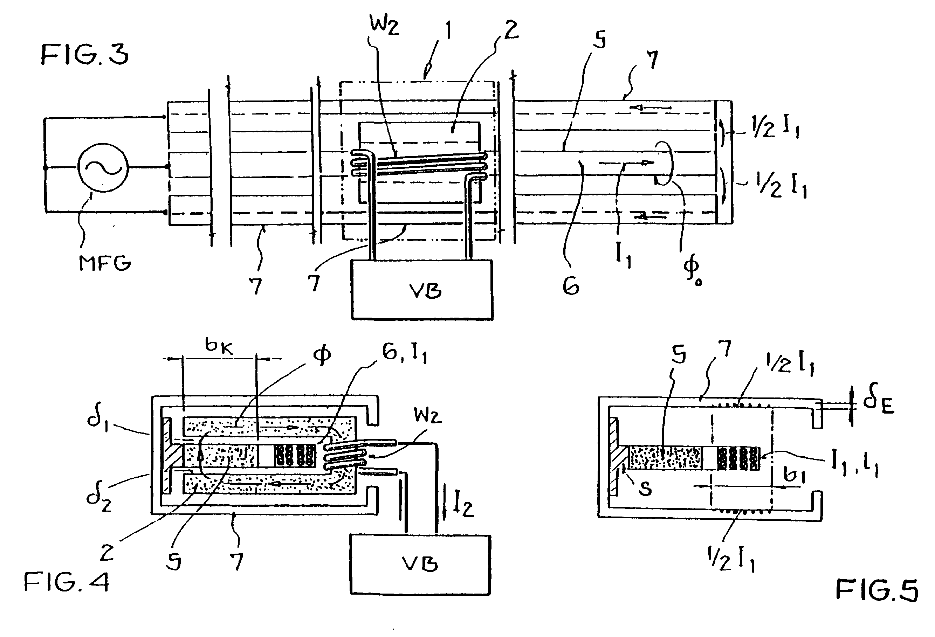

Die Erfindung wird zunächst anhand derschematischen Darstellung in Fig. 3 bis 6 beschrieben. Sie stellt eine zu einer Seite hin offene koaxialleiterähnliche Anordnung dar. Im Übertragerkopf 1 umfaßt ein U-förmiger Ferritkern 2 den Mittelleiter 6 und leitet den magnetischen Fluß Φ durch die Sekundärwicklung W$_2$. Der Mittelleiter 6 wird an einem Ende über einen Mittelfrequenzgenerator gespeist, so daß er den Strom I$_1$ führt. Er ist an dem von der Speisequelle entfernten Ende E mit dem Gehäuse verbunden.

Der Strom teilt sich hier wegen der Symmetrie der Anordnung in zwei gleichgroße Teilströme I$_1$/2 und fließt über das Gehäuse zum Mittelfrequenzgenerator MFG zurück.

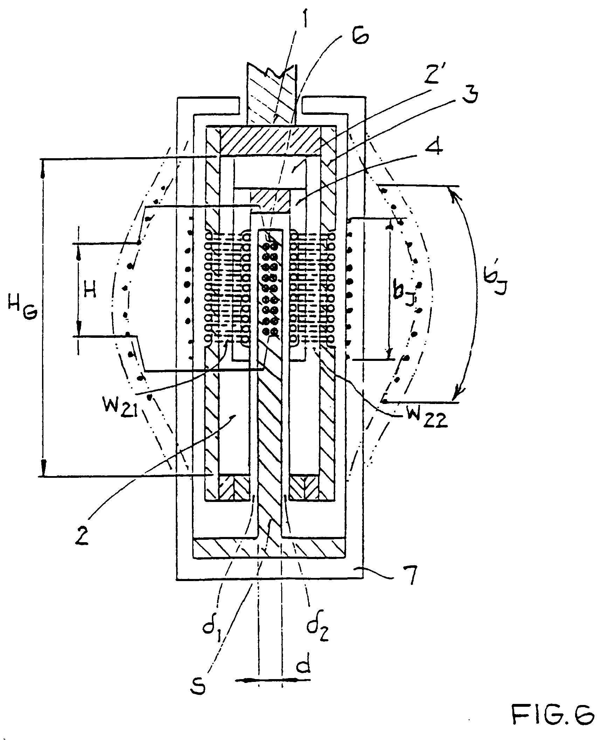

Infolge der bei hohen Frequenzen in massiven Leitern wie dem U-förmigen Gehäuse (beispielsweise aus Aluminium) auftretende Stromverdrängung, häufig auch als Skineffekt bezeichnet, verteilt sich der Strom nicht gleichmäßig in den Gehäusewandungen, sondern dringt von Innen her nur der Eindringtiefe δE entsprechend in die Gehäusewandungen ein. Die Eindringtiefe beträgt bei 25 kHz und Aluminium etwa 0,5 mm. Der Strom verteilt sich auch nicht gleichmäßig über den inneren Umfang des U-Profils, sondern fließt vorwiegend an den Stellen der größten magnetischen Feldstärken. Auf den Streckenabschnitten, an denen sich kein Übertragerkopf befindet, wie in Fig. 5 dargestellt, sind das die dem Mittelleiter 6 gegenüber und am nächsten liegenden Stromführungsbereiche der Ausdehnung b$_l$. Für die Rtickleitung steht daher nur ein Querschnitt zur Verfügung, der sich aus der stromführenden Breite b$_l$ und der durch die Frequenz und die Materialeigenschaften bestimmten Eindringtiefe δE des Mittelfrequenzstromes ergibt.

Der Innen-oder Mittelleiter 6 wird vorteilhafterweise aus Mittelfrequenzlitze oder Hochfrequenzlitze hergestellt, um die Stromverdrängung in diesem Bereich zu eliminieren.

Durch die begrenzte Eindringtiefe des Stromes und die ungleichmäßige Verteilung der Stromdichte auf den Innenseiten des Abschirmgehäuses können der wirksame Widerstand und die Verluste in der Rückleitung 7 größer als in dem Innenleiter 6 aus Mittelfrequenzlitze sein.

Durch die Formgebung von Innenleiter und dem Rück- oder Außenleiter, der gleichzeitig als Abschirmung und Gehäuse 7 dient, ist daher ein möglichst breiter Stromführungsbereich der Breite b$_l$ am inneren Gehäuseumfang anzustreben. Dies geschieht am zweckmäßigster in einer Form, wie Fig. 6 zeigt, indem der Innenleiter 6 schmal und mit einer möglichst großen Höhe H ausgeführt wird. Außerdem wird mit einer Wölbung der Außenwandungen, wie in Fig. 6 gestrichelt dargestellt, eine Vergrößerung der Stromführungsbreite b$_l$ und eine gleichmäßigere Stromverteilung erreicht.

Die Abmessungen der gesamten Übertrageranordnung und die zum Übertragen einer bestimmten Leistung erforderliche Stromstärke I werden entscheidend durch die Größe des wirksamen Luftspalts im magnetischen Kreis bestimmt. Damit der Luftspalt des magnetischen Kreises der den magnetischen Fluß führt, nicht größer sein muß als das mechanische Spiel δ$_1$ und δ$_2$ des Übertragerkopfes, können in die Stütze S des Mittelleiters, wie in Fig.4 und 5 beispielhaft dargestellt, Ferritkörper 5 eingesetzt werden. Diese Ferritteile erhöhen die Induktivität des Mittelleiters praktisch nicht, weil sich der Strom in den Seitenwänden nach physikalischen Gesetzen stets räumlich so einstellt, daß die Induktivität ein Minimum wird, d.h. der Strom vorwiegend auf den den Mittelleitern gegenüberliegenden Seitenteilen fließt.

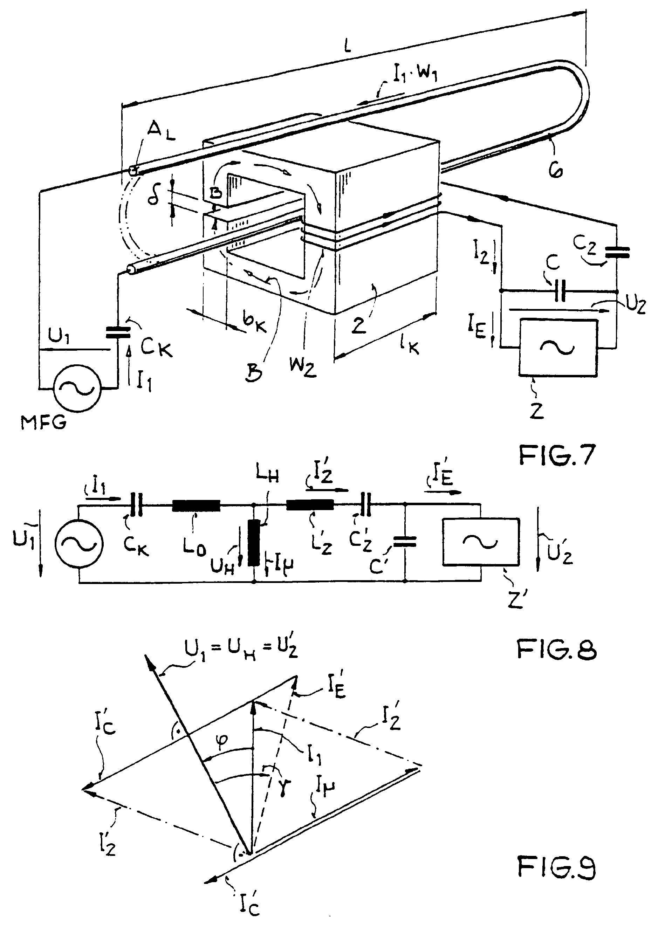

Bei dem U-förmigen Ferritkern 2 in Fig. 6 besteht die Sekundärwicklung aus zwei Teilwicklungen W$_{21}$ und W$_{22}$, die auf beiden Schenkeln des Kems direkt gegenüber dem in Höhe H ausgedehnten Innenleiter angeordnet sind. Durch diese Wicklungsanordnung wird ein hoher magnetischer Koppelfaktor zum Primärleiter 6 und eine optimale Ausnutzung des verfügbaren Wickelraums bei kleiner Bauform und Induktivität des Koaxialleiters erreicht. Ein großer Wickelraum für die Sekundärwicklung ist, wie anhand der Figuren 7 bis 9 näher erläutert wird, im Hinblick auf große realisierbare Spaltweiten oder große übertragbare Leistungen besonders wichtig, weil der Magnetisierungsstrom $I_M$, der bei großen Spaltweiten entsprechend große Werte erreicht, bei der erfindungsgemäßen Übertrageranordnung in den Sekundärwicklungen $W_{21}$, $W_{22}$ fließt.

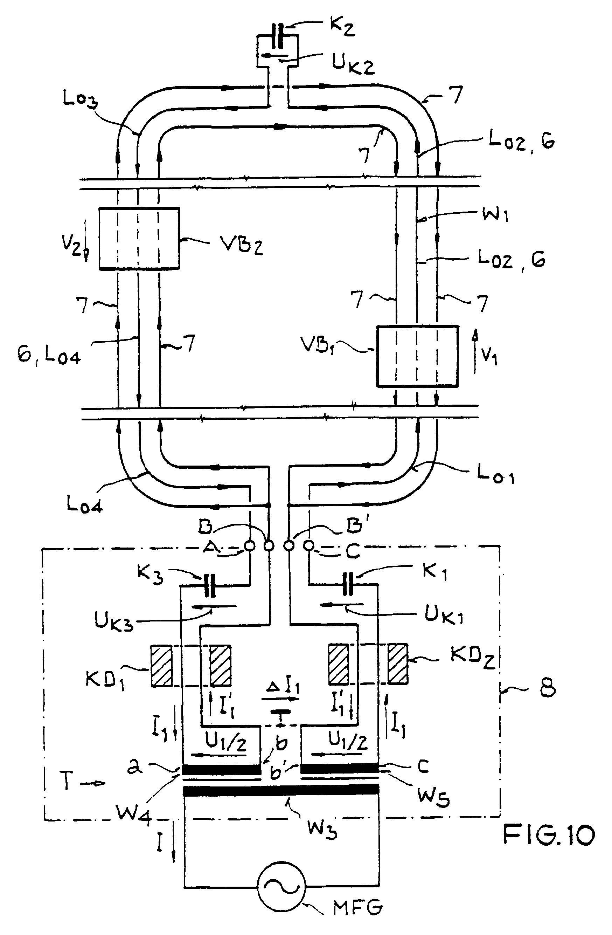

Im folgenden wird anhand der Figuren 7 bis 9 erläutert, wie die erfindungsgemäße Übertragungsvorrichtung möglichst optimal betrieben werden kann. Hierzu ist die Übertragervorrichtung in den Figuren 7 und 8 lediglich mit im Stand der Technik bereits üblichen Schemadarstellungen gezeigt.

Das vereinfachte und verallgemeinerte Übertragungssystem in Fig. 7 besteht aus einer primärseitigen Leiterschleife von der Länge 1, die durch das Fenster eines C-förmigen Ferritkerns 2 verläuft. Er ist entlang der Leiterschleife beliebig verschiebbar. Um den Ferritkern ist eine Sekundärwicklung mit der Windungszahl $W_2$ umgelegt. Sie ist mit einem Kondensator $C_2$ in Reihe geschaltet, der so bemessen ist, daß die Spannung an der sekundärseitigen Streu induktivität $L_2$ bei der Frequenz des Mittelfrequenzgenerators MFG kompensiert wird.

Die primäre Leiterschleife kann aus einer oder mehreren Windungen $W_1$ bestehen, in denen ein Strom $I_1$ fließt. Erteilt sich - dem Übertragerersatzschaltbild in Fig. 8 entsprechend - in den Magnetisierungsstrom $I_\mu$ und in sekundärseitigen Ersatzstrom $I_2$.

Am Ausgang des Übertragers ist eine beliebige Last Z, beispielsweise mit einem Stromrichterstellglied, angeschlossen, das zwischen der Spannung $U_2$ der Grundschwingung des Eingangsstromes IE einen beliebigen Phasenwinkel einstellen kann. Das Zeigerdiagramm in Fig. 7 zeigt die Ströme, Spannungen und Phasenwinkel für einen beliebig angenommenen Betriebszustand. In der Darstellung wurde ein um den Winkel gegenüber der Ausgangsspannung $U_2$ bzw. $U_{2'}$ nacheilender Strom $I_E$ bzw. $I_{E'}$ also eine ohmsch-induktive Lastimpedanz Z bzw. Z' angenommen.

Die im Ersatzschaltbild durch' gekennzeichneten Größen sind, wie von Übertragern und Transformatoren allgemein bekannt, die mit dem Übersetzungsverhältnis der Windungszahlen $W_1/W_2$ auf die primäre Windungszahl umgerechneten Größen.

Da die Übertrageranordnung mit einer konstanten Frequenz betrieben wird, ist eine annähernd vollständige Kompensation der induktiven Spannungsabfälle an der sekundärseitigen Streuinduktivität $L_{2'}$ durch die in Reihe geschaltete Kapazität $C_{2'}$ und an der Induktivität $L_0$ der koaxialen Leiteranordnung durch die Kapazität $C_K$ möglich. Bei Vernachlässigung der ohmschen Spannungsabfälle sind dann, wie im Zeigerdiagramm in Fig. 9 dargestellt, die Lastspannung $U_{2'}$ die Hauptfeldspannung $U_H$ des Übertragers und die Speisespannung $U_1$ der Anordnung gleich. Die zur Lastimpedanz Z' parallel liegende Kapazität C' kompensiert, wie Fig. 9 zeigt, nicht nur den Magnetisierungsstrom Ip sondern auch noch einen Teil der induktiven Komponente des Laststromes $I_{E'}$. Durch die Einstellung des Lastwinkels y, beispielsweise mit einem Stromrichter, und die Dimensionierung der sekundärseitigen Kapazität C bzw. C' kann ein Phasenwinkel $\varphi = 0$ zwischen dem Strom $I_1$ des offenen Koaxialleiters und der Speisespannung $U_1$ der übertrageranordnung eingestellt werden. Der offene Koaxialleiter überträgt dann reine Wirkleistung, obwohl ein großerdurch die Spaltbreite der Übertrageranordnung bedingter Magnetisierungsstrom $I_\mu$ auftritt und die Induktivität $L_0$ des Koaxialleiters bei Leiterlängen I im 100 m-Bereich große Werte erreicht. Lediglich der sekundäre Strom $I_{2'}$ in der entsprechend der Übertragerkopflänge $I_K$ wesentlich kürzeren Sekundärwicklung $W_2$ ist durch den Magnetisierungsstrom $I_\mu$ erhöht.

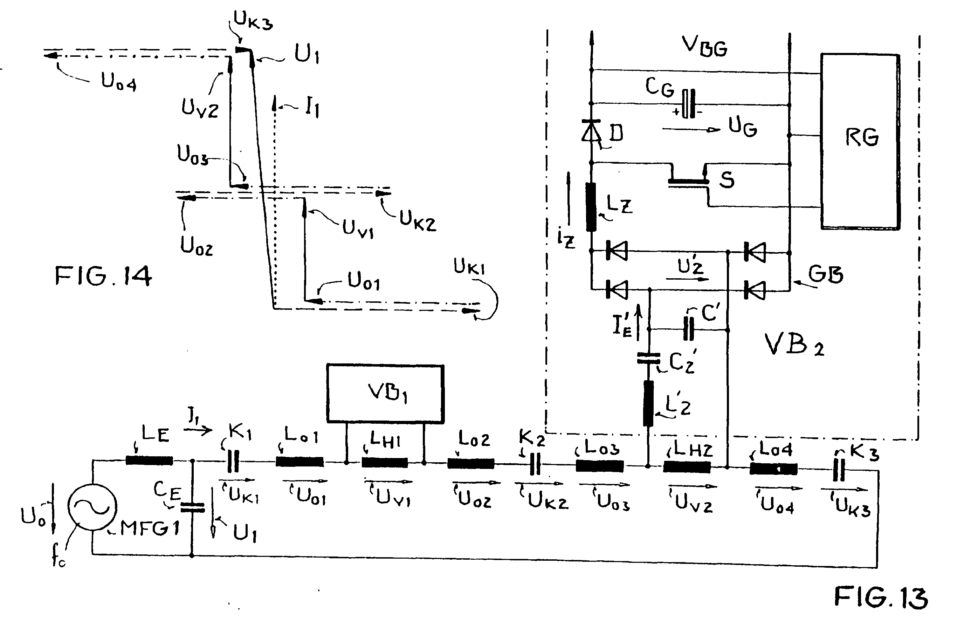

Für viele Anwendungen der berührungslosen Energieübertragung, wie z. B. auch in der Fördertechnik, werden Übertrageranordnungen benötigt, bei denen sich mehrere Verbraucher mit beliebig veränderbarem Leistungsbedarf auf derselben Übertragungsstrecke bewegen können. Das Einsetzen mehrerer Übertragerköpfe in den offenen Koaxialleiter der Fig. 3 oder in die primäre Leiterschleife 6, die in Fig. 7 dargestellt ist, führt elektrisch zu einer Reihenschaltung der bewegbaren Verbraucher. In einer vorteilhaften Ausführungsform der Erfindung nach Fig. 13 wird in den Koaxialleiter ein konstanter Mittelfrequenzstrom $I_1$ eingeprägt. Wie später noch erläutert wird, sind dazu elektronische Leistungsstellglieder mit Vorteil zu verwenden, welche ausgangsseitig unterschiedliche Verbraucher mit den erforderlichen Spannungen und Strömen speisen. Auf der Eingangsseite werden in den Kreis des eingeprägten konstanten Stroms $I_1$ des Koaxialleiters den Windungen der Verbraucher $VB_1$, $VB_2$ entsprechende Spannungen $U_{V1}$, $U_{V2}$ eingekoppelt.

Darüberhinaus sind in sich geschlossene Übertragungsstrecken, auf denen die Verbraucher endlose Bewegungen ausführen, von Vorteil. Dabei treffen, wie in Fig. 10 gezeigt ist, an einer Einspeisestelle zwei Enden des Koaxialleiters mit insgesamt vier Anschlüssen A, B, B' und C zusammen, die an einen Mittelfrequenzgenerator MFG anzuschließen sind. Dieser hat die Eigenschaft einer Mittelfrequenz-Konstantstromquelle (siehe Fig. 10) und prägt seinen Strom I in die Primärwicklung $W_3$ eines aus dieser und den Sekundärwicklungen $W_4$ und $W_5$ bestehenden Transformators ein.

Die beiden Sekundärwicklungen $W_4$ und $W_5$ haben die gleichen Windungszahlen und sind mit ihren Windungsenden a, b, b' una c über Kompensationskondensatoren $K_3$, $K_1$ in der Weise an die Koaxialleiterenden A, B, B' und C angeschlossen, daß die Sekundärwicklungen mit dem Innenund Außenleiter (über die Verbindungen a, $W_4$, b, B, Außenleiter 7, B', b', $W_5$, c, $K_{1'}$ C, Innenleiter 6, A, $K_3$, a) einen Stromkreis bilden, in dem der Innen- und Außenleiter von demselben Strom $I_1 = I_1$, in entgegengesetzter Richtung geschlossen werden. Außerdem wirkt dieser Strom in den Sekundärwicklungen $W_4$ und $W_5$ zu gleichen Teilen additiv auf die Primärwicklung $W_3$ des Transformators zurück und an den Anschlüssen A, C des Innenleiters treten gegenüber den Außenleiteranschlüssen B, B' gleich große in der Phasenlage entgegengesetzte Spannungen der Größe $U_{K3}$ - 1/2 $U_1$ und - ($U_{K1}$ - 1/2 $U_1$ auf).

Bei dem offenen Koaxialleiter einer endlosen Übertragungsstrecke nach Fig. 10 bildet das Gehäuse 7, d. h. der Außenleiter des offenen Koaxialleiters, mit den Anschlußpunkten B, B', b, b' bezüglich des Potentials einen neutralen Mittelpunkt. Es ist aus Gründen der Sicherheit gegen elektrischen Schlag und wegen der elektromagnetischen Verträglichkeit von Vorteil, diesen neutralen Mittelpunkt mit der Masse bzw. der Erde zu verbinden. Dies geschieht am zweckmäßigsten, wie in Fig. 10 gestrichelt angedeutet, an der Einspeisestelle und dort aus Symmetriegrtinden an dem Verbindungspunkt b - b' der beiden gleichen Sekundärwicklungen $W_4$ und $W_5$. Durch diese Verbindung entsteht jedoch über die Anschlußpunkte B, B' und die vom Außenleiter 7 gebildete große Schleife ein zusätzlicher Stromkreis, in dem ein Ausgleichsstrom $\Delta I_1$ fließen kann. Durch diesen Ausgleichsstrom werden die Ströme $I_1$ und $I_1$, im Innen- und Außenleiter des Koaxialleiters ungleich, und es entsteht in der Umgebung des Koaxialleiters ein zusätzliches, die elektromagnetische Verträglichkeit negativ beeinflussendes Streufeld. Zur Vermeidung dieses Ausgleichsstromes, d. h. zur Sicherstellung der Gleichheit der Ströme $I_1$ und $I_1$, des Koaxialleiters werden die Zuleitungen dieser Ströme über Kompensationsdrosseln $KD_1$ und $KD_2$ in der Weise geführt, daß der Strom $I_1$ des Innenleiters und der Strom $I_1$, des Außenleiters eine entgegengesetzte Magnetisierung der weichmagnetischen Drosselkerne mit hoher magnetischer Permeabilität bewirken.

Die hohe Induktivität dieser Kompensationsdrosseln ist bei $I_1$ gleich $I_1$, bzw. $\Delta I_1$ gleich Null unwirksam und begrenzt eine mögliche Ungleichheit auf vernachlässigbare Werte von $\Delta I_1$. Die Kompensationsdrosseln $KD_1$ und $KD_2$ sind sehr einfach aus Ferritringkernen, die über die Zuleitungen der Koaxialleiter geschoben werden, zu realisieren.

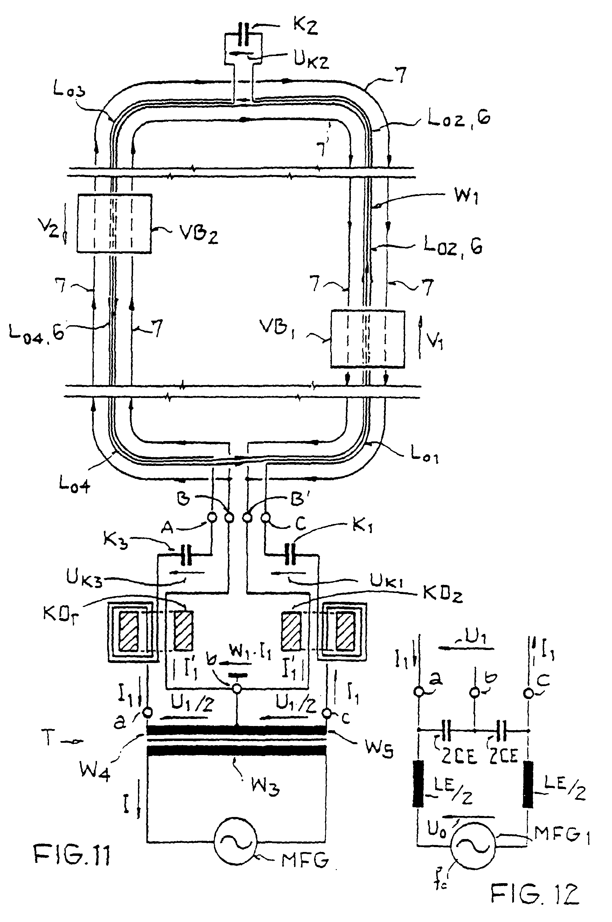

Der Einsatz der Kompensationsdrosseln bei der Speisung von in sich geschlossenen Übertrageranordnungen mit offenem Koaxialleiter ermöglicht auch - wie anhand der Fig. 11 gezeigt wird - die Realisierung von offenen Koaxialleitern mit aus mehreren Windungen $W_1$ bestehenden Innenleitern.

Für die Wirkungsweise der koaxialen Übertragungsanordnung ist wesentlich, daß in den Wänden des Koaxialleiters der Gesamtstrom $W_1$. $I_1$ in entgegengesetzter Richtung zu $I_1$ im Innenleiter fließt.

Die Gleichheit der Gesamtströme von Innenund Außenleiter wird dadurch erreicht, daß die zu dem Transformator T bzw. der Mittelfrequenzstromqueile MFG1 führenden Anschlußleitungen A-a, C-c in so vielen Windungen um die Kerne der Kompensationsdrosseln $KD_1$, $KD_2$ gewunden werden, daß zwischen diesen Windungen und den ebenfalls durch die Kerne der Kompensationsdrosseln geführten Anschlußleitungen B-b, B'-b der Koaxialleiteraußenwand ein Übersetzungsverhältnis von $W_1$ entsteht. In dem in Fig. 11 dargestellten Beispiel sind die Anschlußleitungen des Koaxialleiters nur einmal durch die Kerne der Drosseln $KD_1$, $KD_2$ geführt, die Innenleiteranschlußleitungen sind daher genau $W_1$-mal um die Drosselkerne gewunden. Der Verbindungspunkt b der Außenleiteranschlußleitungen ist auch hier der Symmetriepunkt der gesamten Übertrageranordnung und daher an den sekundärseitigen Mittelabgriff des Transformators sowie an den Massepunkt bzw. die "Erde" angeschlossen.

Der Transformator T in Fig. 10 und Fig. 11 dient im wesentlichen der Bildung der beiden gleich großen Teilspannungen 1/2 $U_1$ und der Anpassung der Impedanz der Übertrageranordnungen an die Mittelfrequenzstromquelle MFG. Mittelfrequenzstromquellen werden nach dem Stand der Technik aus einer Mittelfrequenzspannungsquelle, beispielsweise einem Mittelfrequenzwechselrichter mit einer Stromregelung realisiert und sind daher sehr aufwendig.

Eine besonders einfache Speiseschaltung mit Stromquellenverhalten, die von einer Mittelfrequenzspannungsquelle MFG1, beispielsweise einem Wechselrichter ohne aufwendige Stromregelung ausgeht, ist in Fig. 12 dargestellt. Bei diesem Schaltungsprinzip wird die Teilung der Spannung $U_1$ in zwei gleichgroße Teilspannungen durch die Reihenschaltung von zwei gleichgroßen Kondensatoren mit der Kapazität 2 $C_E$ erreicht. Die äußeren Anschlüsse a, c dieser Reihenschaltung sind über Induktionsspulen mit der Induktivität 1/2 $L_E$ an eine Mittelfrequenzspannungsquelle MFG1 mit der Spannung $U_0$ angeschlossen.

Es läßt sich rechnerisch nachweisen, daß für die Schaltungsanordnung in Fig. 12 die Beziehung

$$I_1 = U_0 \cdot \sqrt{C_E / L_E}$$

gilt, wenn $C_E$ und $L_E$ so gewählt sind, daß sie bei der Frequenz $f_0$ der Mittelfrequenzspannungsquelle MFG1 die Resonanzbedingung erfüllen.

In diesem Fall wird in den Koaxialleiter ein Strom $I_1$ eingeprägt, dessen Stärke allein durch die Spannung $U_0$ und die Größen $C_E$ und $L_E$ bestimmt ist. Die sich an den Klemmen a, c einstellende Spannung $U_1$ hängt ausschließlich von der Größe des Stromes $I_1$ und der Impedanz des an die Klemmen a, b, c angeschlossenen Übertragungssystems mit den Verbrauchern $VB_1$ und $VB_2$ ab. Die Spannung $U_1$ ist, wie anhand des Ersatzschaltbildes der Fig. 13 und des Zeigerdiagramms Fig. 14 gezeigt wird, die Summe mehrerer Teilspannungen. Bei annähernd vollständiger Kompensation des Übertragungssystems ist sie im wesentlichen durch die Spannungen der Verbraucher $VB_1$ und $VB_2$ bestimmt. Wegen des stromeinprägenden Verhaltens der aus MFG1, LE, $C_E$ gebildeten Speiseschaltung wirkt die Spannung $U_1$ auf den Strom $I_1$ nicht zurück.

In dem Ersatzschaltbild der Fig. 13 sind die in Fig. 12 aus Symmetriegründen geteilten Kapazitäten und Induktivitäten in jeweils einer Kapazität $C_E$ und einer Induktivität $L_E$ vereint. Die zwischen den Kompensationskondensatoren $K_1$ bis $K_3$ und den bewegbaren Verbrauchern $VB_1$ und $VB_2$ liegenden Abschnitte des offenen Koaxialleiters sind in dem Ersatzschaltbild Fig. 13 durch die Induktivitäten $L_{01}$, $L_{02}$, $L_{03}$ und $L_{04}$ der entsprechenden Leiterabschnitte dargestellt. Am Ort der bewegbaren Verbraucher $VB_1$ und $VB_2$ bilden die Übertragerköpfe mit ihren Ferritkernen, wie anhand der Figuren 7 bis 9 gezeigt wird, die berührungslosen Übertrager mit den Hauptinduktivitäten $L_{H1}$ und $L_{H2}$. Zur Erläuterung der individuellen Steuerung und Regelung des Leistungsflusses der einzelnen, über einen gemeinsamen Koaxialleiter gespeisten Verbraucher, ist für den Verbraucher $VB_2$ das Ersatzschaltbild des Übertragerkopfes mit einer Leistungsstell- und Regeleinrichtung dargestellt. Die sekundärseitige Streuinduktivität $L_2'$ und der Magnetisierungsstrom $I\mu$ des Übertragerkopfes sind den Figuren 7 bis 9 entsprechend durch die Kapazitäten $C_2'$ und $C'$ kompensiert, so daß bei der Resonanzfrequenz $f_0$ des Mittelfrequenzgenerators MFG1 die Induktivität $L_2'$ mit $C_2'$ einen Reihenschwingkreis in Resonanz und $L_{H2}$ mit $C'$ einen Parallelschwingkreis in Resonanz bilden.

Bei dieser vollständigen Kompensation des Übertragerkopfes sind der Strom $I_1$ des Koaxialleiters und die Grundschwingung des Stromes $I_E'$ am Eingang der zur Kapazität $C'$ parallel liegenden Gleichrichterbrücke GB identisch.

Dieser Strom fließt im Gleichstromzwischenkreis als Gleichstrom JZ über die Induktivität LZ und abwechselnd über die Diode D oder den steuerbaren Halbleiterschalter S. Das richtet sich danach, ob der Schalter S sperrt oder leitet. Bei gesperrtem Schalter S wird der Strom jz über die Diode D einem Gleichspannungspufferkondensator CG zugeführt, bei leitendem Schalter dagegen an dem Kondensator CG vorbeigeleitet. Eine Regeleinrichtung RG steuert den Schalter S mit einer hohen Taktfrequenz abwechselnd in den leitenden und sperrenden Zustand, wobei die relativen Sperrzeiten so eingestellt werden, daß an einem oder mehreren Gleichspannungsverbrauchern $V_{BG}$ bei beliebiger Stromaufnahme die gewünschte Spannung $U_G$ gebildet wird. Wegen der Einprägung der Ströme $I_1$ und $I_E'$ stellt sich dabei an der Hauptinduktivität $L_{H2}$ die Spannung $U_{v2}$ so ein, daß das Produkt $U_{v2} \cdot I_1$ dem Leistungsverbrauch entspricht.

Fig. 14 zeigt das Zeigerdiagramm zu dem Ersatzschaltbild eines Gesamtsystems nach Fig. 13. Die Teilspannungen $U_{01}$, $U_{02}$, $U_{03}$ und $U_{04}$ an den Induktivitäten der Koaxialleiterabschnitte sind durch Strichpunktlinien dargestellt und haben gegenüber dem punktierten

Koaxialleiterstrom $I_1$ eine um 90° vorauseilende Winkellage. Sie werden durch die gestrichelten Pfeile $U_{K1}$, $U_{K2}$ und $U_{K3}$ weitgehend kompensiert. An den Stellen, an denen sich gerade ein bewegbarer Verbraucher befindet, entstehen an den Hauptinduktivitäten $L_{H1}$ und $L_{H2}$ der Übertragerköpfe entsprechend der übertragenen Leistung die ausgezogenen und mit dem Koaxialleiterstrom $I_1$ weitgehend phasengleichen Spannungen $U_{V1}$ und $U_{v2}$. Wegen der nahezu vollständigen Kompensation der Übertragerkopf- und Koaxialleiterinduktivitäten ist die Eingangsspannung $U_1$ des Koaxialleiters ebenfalls annähernd phasengleich mit dem Koaxialleiterstrom und etwa gleich der Summe der Spannungen $U_{V1}$ und $U_{V2}$ an den elektrisch in Reihe geschalteten Übertragerköpfen.

**Patentansprüche**

1.     Anordnung zur berührungslosen Übertragung elektrischer Leistung auf einen bewegbaren Verbraucher mit einem als langgestreckte parallele Leiteranordnung ausgebildeten ruhenden Primärkreis, der an eine Wechselspannungs- oder Wechselstromquelle einer höheren Frequenz angeschlossen ist und einem am bewegbaren Verbraucher angebrachten Übertragerkopf mit einer Sekundärwicklung (W2), welche mit dem Primärkreis magnetisch gekoppelt ist, wobei die Leiteranordnung des Primärkreises einen als fast geschlossenes Gehäuse (7) ausgebildeten Außenleiter und einen etwa im Zentrum des Gehäuses befindlichen Mittelleiter (6) aufweist, wobei im Außenleiter ein gleich großer, entgegengesetzt gerichteter Strom (I1) wie im Mittelleiter fließt, **dadurch gekennzeichnet,**

    **dass** der Übertragerkopf einen U-förmigen Ferritkern aufweist, der den Mittelleiter umfasst und der von der Sekundärwicklung umfasst wird,

    **dass** an die Sekundärwicklung ($W_2$) des Übertragerkopfes parallel zu dem Lastwiderstand (Z) des Verbrauchers ein Kondensator geschaltet ist, der den Magnetisierungsstrom ($I\mu$) zum Erzeugen der magnetischen Flußdichte (B) im Luftspalt des Ferritkernes liefert,

    **dass** zu dem Mittelleiter (6) des Primärkreises eine Kapazität ($C_K$) zur Kompensation des induktiven Spannungsabfalls in Reihe geschaltet ist, die die Induktivität ($L_0$) der koaxialen Leiteranordnung annähernd vollständig kompensiert,

    **dass** die Wechselspannungs- oder Wechselstromquelle einer höheren Frequenz als Mittelfrequenzstromquelle (MFG) ausgebildet ist, die einen konstanten, von den Spannungen ($U_{V1}$, $U_{v2}$) der Verbraucher unabhängigen Mittelfrequenzstrom ($I_1$) in die Leiteranordnung des Primärkreises einprägt.

2.     Anordnung nach Anspruch 1, **dadurch gekennzeichnet, dass** der U-förmige Ferritkern (2) auf beiden Schenkeln dem primärseitigen Leiter gegenüberliegende Wicklungen (W21, W22) trägt, deren Höhe etwa der Höhe (H) des Primärleiters entspricht und zwischen dem 0,3fachen und 0,5fachen der Gesamthöhe ($H_G$) des U-förmigen Kerns (2) liegt.

3.  Anordnung nach Anspruch 1 und 2, **dadurch gekennzeichnet, dass** die Höhe (H) des Primärleiters (6) im Verhältnis zur neben dem Leiterbereich liegenden Durchtrittsbreite ($b_K$) des magnetischen Flusses so gewählt ist, dass die übertragene Leistung maximal ist.

4.  Anordnung nach einem der Ansprüche 1 bis 3, **dadurch gekennzeichnet, dass** die dem Mittelleiter (6) gegenüberliegenden Außenwandungen des Gehäuses (7) zur möglichst gleichmäßigen Verteilung des Stromes über einen möglichst breiten Stromführungsbereich ($b_I$, $b_{I'}$) eine Wölbung aufweisen.

5.  Anordnung nach einem der Ansprüche 1 bis 4, **dadurch gekennzeichnet, dass** die Querschnitte von Außenleiter und Mittelleiter und die Durchtrittsbreite (b) des magnetischen Flusses geometrisch so gestaltet und die Größenverhältnisse so bemessen sind, dass die elektrische Verlustleistung ein Minimum erreicht.

6.  Anordnung nach einem der Ansprüche 1 bis 5, **dadurch gekennzeichnet, dass** der Mittelsteg (S) in der Nähe des Fußes zum Reduzieren der magnetischen Spaltweite auf die unbedingt erforderlichen mechanischen Luftspalte ($\delta1, \delta2$) einen ferritischen Bereich (5) etwa von der Breite ($b_K$) aufweist.

7.  Anordnung nach einem der Ansprüche 1 bis 6, **dadurch gekennzeichnet, dass** die Sekundärwicklung mit dem Kondensator ($C_2$) in Reihe geschaltet ist, der den induktiven Spannungsabfall an der Streuinduktivität des Übertragerkopfes kompensiert.

8.  Anordnung nach einem der Ansprüche 1 bis 7, **dadurch gekennzeichnet, dass** der Mittelleiter (6) am Ende (E) der Strecke, die ein bewegbarer Verbraucher maximal zurücklegt, mit dem Außenleiter, d. h. dem Gehäuse, verbunden ist und ein Mittelfrequenzgenerator (MFG) am Anfang der Strecke den Strom ($I_1$) zwischen Mittelleiter und Gehäuse einspeist.

9.  Anordnung nach einem der Ansprüche 1 bis 8, **dadurch gekennzeichnet, dass** die Länge der Wegstrecke und primären Leiteranordnung mehr als 100 m beträgt.

10. Anordnung nach einem der Ansprüche 1 bis 9, **dadurch gekennzeichnet, dass** der Primärkreis eine beliebig verlaufende, in sich geschlossene endlose Bahn bildet, welche eine lückenlose Energieübertragung auf mehrere bewegbare Verbraucher ermöglicht und dass an den Anschlüssen (A, B, B', C) des Primärkreises ein Netzwerk (8) den vom Mittelfrequenzgenerator (MFG) gelieferten Speisestrom (I, $I_1$, $I_{1'}$) in entgegengesetzten Richtungen in den Mittelleiter(6) und den Außenleiter (7) einleitet.

11. Anordnung nach Anspruch 10, **dadurch gekennzeichnet, dass** das Netzwerk (8) zur Einkopplung gleichgroßer entgegengesetzter Ströme ($I_1$, $I_{1'}$) in den Mittelleiter (6) und den Außenleiter (7) einer in sich geschlossenen Bahn einen Transformator (T) mit zwei Sekundärwicklungen ($W_4$, $W_5$) mit gleichen Windungszahlen enthält, deren mittlere, einen Spannungsmittelpunkt bildende Enden (b, b') über die Anschlüsse (B, B') des koaxialen Außenleiters miteinander verbunden sind und deren äußere gegenphasige Eingänge (a, c) über die Anschlüsse (A, C) an den Mittelleiter (6) angeschlossen sind.

12. Anordnung nach den Ansprüchen 10 und 11, **dadurch gekennzeichnet, dass** die jeweils an den Innen- und Außenleiter eines oder beider Enden (A, B), (B', C) der primärseitigen Leiteranordnung angeschlossenen Zuleitungspaare über Kompensationsdrosseln ($KD_1$, $KD_2$) geführt werden, welche die Gleichheit der Ströme ($I_1$, $I_{1'}$) im Mittel- und Außenleiter bewirken.

13. Anordnung nach Anspruch 12, **dadurch gekennzeichnet, dass** die Zuleitungen zu den Außenleiteranschlüssen (B, B') vor der Durchführung durch die Kompensationsdrosseln (KD1, KD2) auf der von den Außenleiteranschlüssen (B, B') abgewandten Seite der Kompensationsdrosseln an einen gemeinsamen Verbindungspunkt (b) geführt sind, wobei der gemeinsame Verbindungspunkt (b) wahlweise potentialfrei, d. h. isoliert ist, oder mit dem Mittelabgriff der Mittelfrequenzquelle und/oder mit dem Masse- bzw. Erdpotential verbunden ist.

14. Anordnung nach Anspruch 12 und 13, **dadurch gekennzeichnet, dass** der Mittelleiter (6) aus mehreren Windungen ($W_1$) besteht und die Gleichheit der Gesamtströme ($I_1 * W_1$) im Mittelleiter und des Stromes ($I_{1'}$) im Außenleiter **dadurch** erreicht wird, dass das Windungszahlverhältnis der Kompensationsdrosseln ($KD_1$, $KD_2$) mit der Windungszahl ($W_1$) des Mittelleiters (6) übereinstimmt.

15. Anordnung nach einem der Ansprüche 1 bis 14, **dadurch gekennzeichnet, dass** das Netzwerk (8) zur Symmetrisierung der Stromeinspeisung an mehreren Stellen der endlosen Bahn vorgesehen ist.

16. Anordnung nach einem der Ansprüche 1 bis 15, **dadurch gekennzeichnet, dass** zu dem Mittelleiter (6) Kondensatoren ($C_K$, $C_{K1}$- $C_{K3}$)zur Kompensation des induktiven Spannungsabfalls in Reihe geschaltet und so auf die Gesamtlänge des Mittelleiters verteilt sind, dass die Kompensation in mehreren Abschnitten mit technisch beherrschbaren Teilspannungen ($U_{01}$ - $U_{04}$) erfolgt.

## Claims

1. Arrangement for contactless transmission of electrical power to a movable load, with a static primary circuit, which is formed as an elongate, parallel conductor arrangement and is connected to an alternating voltage source or alternating current source of a higher frequency, and a transfer head, which is mounted at the movable load, with a secondary winding ($W_2$) which is magnetically coupled with the primary circuit, wherein the conductor arrangement of the primary circuit comprises an outer conductor formed as an almost closed housing (7) and a centre conductor (7) disposed approximately in the centre of the housing, wherein flowing in the outer conductor is a current ($I_1$) equal in size, but oppositely directed, to that in the centre conductor, **characterised in that** the transfer head comprises a U-shaped ferrite core which surrounds the centre conductor and is surrounded by the secondary winding, a capacitor which supplies the magnetising current ($I_\mu$) for producing the magnetic flux density (B) in the air gap of the ferrite core is connected to the secondary winding ($W_2$) of the transfer head parallel to the load resistance (Z) of the load, a capacitance ($C_K$) for compensation for the inductive voltage drop is connected in series with the centre conductor (6) of the primary circuit and provides approximately complete compensation for the inductance ($L_0$) of the coaxial conductor arrangement, and the alternating voltage source or alternating current source of a higher frequency is formed as centre frequency current source (MFG) which imposes a constant centre frequency current ($I_1$), which is dependent on the voltages ($U_{V1}$, $U_{V2}$) of the load, in the conductor arrangement of the primary circuit.

2. Arrangement according to claim 1, **characterised in that** the U-shaped ferrite core (2) carries, on its two limbs, windings ($W_{21}$, $W_{22}$) which are opposite the conductor at the primary side and the height of which approximately corresponds with the height (H) of the primary conductor and lies between 0.3 times and 0.5 times the total height ($H_G$) of the U-shaped core (2).

3. Arrangement according to claim 1 and 2, **characterised in that** the height (H) of the primary conductor (6) in relation to the cross-sectional width ($b_K$), which lies adjacent to the conductor region, of the magnetic flux is so selected that the transmitted power is at its maximum.

4. Arrangement according to one of claims 1 to 3, **characterised in that** the outer walls, which lie opposite the centre conductor (6), of the housing (7) have a curvature for the most uniform possible distribution of the current over a widest possible current conducting region ($b_I$, $b_{I'}$).

5. Arrangement according to one of claims 1 to 4, **characterised in that** the cross-section of outer conductor and centre conductor and the cross-sectional width (b) of the magnetic flux are so geometrically formed and the size relationships so dimensioned that the electrical power loss is at a minimum.

6. Arrangement according to one of claims 1 to 5, **characterised in that** the centre web (S) has a ferritic region (5) of about the width ($b_K$) in the vicinity of the foot for reducing the magnetic gap width to the absolutely necessary mechanical air gap ($\delta_1$, $\delta_2$).

7. Arrangement according to one of claims 1 to 6, **characterised in that** the secondary winding is connected in series with the capacitor ($C_2$), which compensates for the inductive voltage drop at the stray inductance of the transfer head

8. Arrangement according to one of claims 1 to 7, **characterised in that** the centre conductor (6) is connected with the outer conductor, i.e. the housing, at the end (E) of the path which a movable load covers at most, and a mean frequency generator (MFG) at the start of the path feeds the current ($I_1$) between centre conductor and housing.

9. Arrangement according to one of claims 1 to 8, **characterised in** the length of the travel path and primary conductor arrangement is more than 100 metres.

10. Arrangement according to one of claims 1 to 9, **characterised in that** primary circuit forms an endless path, which is closed in itself and extends as desired and which enables an unbroken energy transmission to several movable loads, and that at the terminals (A, B, B', C) of the primary circuit a network (8) conducts the supply current (I, $I_1$, $I_{1'}$), which is delivered by the mean frequency generator (MFG), into the centre conductor (6) and the outer conductor (7) in opposite directions.

11. Arrangement according to claim 10, **characterised in that** for coupling currents ($I_1$,$I_{1'}$) equal in size, but opposite in direction, into the centre conductor (6) and the outer conductor (7) the network (8) comprises a path, which is closed in itself, to a transformer (T) with two secondary windings ($W_4$, $W_5$) with equal

number of turns, the intermediate ends (b, b'), which form a voltage centre point, of which are connected together by way of the terminals (B, B') of the coaxial outer conductor and the outer, oppositely phased inputs (a, c) of which are connected with the centre conductor (6) by way of the terminals (A, C).

12. Arrangement according to claims 10 and 11, **characterised in that** the feed line pair, which are respectively connected to the inner and outer conductor of one or both ends (A, B), (B', C) of the conductor arrangement at the primary side, are led by way of compensating chokes ($KD_1$, $KD_2$) which produce the equality of the currents ($I_1$, $I_{1'}$) in the centre conductor and outer conductor.

13. Arrangement according to claim 12, **characterised in that** the feed lines to the outer conductor terminals (B, B') are, before passage through the compensating chokes ($KD_1$, $KD_2$), led to the sides, which are remote from the outer conductor terminals (B, B'), of the compensating chokes at a common connecting point (b), wherein the common connecting point (b) is selectably free of potential, i.e. insulated, or connected with the centre tap of the mean frequency source and/or with the earth or ground potential.

14. Arrangement according to claims 12 and 13, **characterised in** the centre conductor (6) consists of several windings ($W_1$) and the equality of the total currents ($I_1 . W_{1'}$) in the centre conductor and the current ($I_{1'}$) in the outer conductor is achieved thereby that the ratio of the number of turns of the compensating chokes ($KD_1$, $KD_2$) corresponds with the number of turns ($W_1$) of the centre conductor (6).

15. Arrangement according to one of claims 1 to 14, **characterised in that** for the symmetrisising of the current feed the network (8) is provided at several locations of the endless path.

16. Arrangement according to one of claims 1 to 15, **characterised in that** capacitors ($C_K$, $C_{K1}$ - $C_{K3}$) for compensation for the inductive voltage decay are connected in series to the centre conductor (6) and are so distributed over the overall length of the centre conductor that the compensation is effected in several sections by technically predominating partial voltages ($U_{01}$ - $U_{04}$).

**Revendications**

1. Agencement pour la transmission, sans contact, d'une puissance électrique à un usager mobile, avec un circuit primaire en position de repos, réalisé comme agencement de conducteurs parallèle allongé, qui est raccordé à une source de tension alternative ou de courant alternatif d'une fréquence plus élevée et une tête de transmission montée sur l'usager mobile avec un enroulement secondaire (W2), qui est couplé magnétiquement avec le circuit primaire, l'agencement de conducteurs du circuit primaire présentant un conducteur extérieur réalisé comme boîtier (7) presque fermé et un conducteur central (6) se trouvant à peu près au centre du boîtier, où s'écoule dans le conducteur extérieur un courant (I1) de même grandeur, orienté de manière opposée, comme dans le conducteur central, **caractérisé en ce que**

la tête de transmission présente un noyau en ferrite en forme de U, qui inclut le conducteur central et est englobé par l'enroulement secondaire,

**en ce que** un condensateur, qui fournit le courant de magnétisation ($I_\mu$) pour la génération de la densité de flux (B) magnétique dans l'entrefer du noyau en ferrite, est branché sur l'enroulement secondaire ($W_2$) de la tête de transmission parallèlement à la résistance de charge (Z) de l'usager,

**en ce qu'**une capacité ($C_k$), qui compense approximativement complètement l'inductance ($L_0$) de l'agencement de conducteurs coaxial, est branchée en série avec le conducteur central (6) du circuit primaire pour la compensation de la chute de tension inductive,

**en ce que** la source de tension alternative ou de courant alternatif d'une fréquence plus élevée que la source est conçue comme source de courant de fréquence moyenne (MFG), qui applique un courant de fréquence moyenne ($I_1$) constant, indépendant des tensions ($U_{V1}$, $U_{V2}$) des usagers. Dans l'agencement du circuit primaire.

2. Agencement selon la revendication 1, **caractérisé en ce que** le noyau en ferrite (2) en forme de U porte sur les deux branches des enroulements ($W_{21}$, $W_{22}$) opposés au conducteur côté primaire, dont la hauteur correspond à peu près à la hauteur (H) du conducteur primaire et se situe entre 0, 3 fois et 0,5 fois la hauteur totale ($H_G$) du noyau (2) en forme de U.

3. Agencement selon les revendications 1 et 2, **caractérisé en ce que** la hauteur (H) du conducteur primaire (6), par rapport à la largeur de passage ($b_K$), située à côté de la zone conducteur, du flux magnétique est choisie de façon que la puissance transmise soit maximale.

4. Agencement selon l'une quelconque des revendications 1 à 3, **caractérisé en ce que** les parois extérieures du boîtier (7) opposées au conducteur central (6), en vue d'une répartition la plus régulière possible du courant, présentent un bombement sur une zone conductrice de courant ($b_I$, $b_{I'}$) la plus large possible.

5. Agencement selon l'une quelconque des revendications 1 à 4, **caractérisé en ce que** les sections transversales du conducteur extérieur et du conducteur central et la largeur de passage (b) du flux magnétique sont configurées géométriquement et les rapports de grandeur sont dimensionnés de façon que la puissance de perte électrique atteigne un minimum.

6. Agencement selon l'une quelconque des revendications 1 à 5, **caractérisé en ce que** la branche médiane (S), au voisinage de la base, en vue de la réduction de la largeur de fente magnétique aux entrefers mécaniques absolument requis ($\delta_1$, $\delta_2$), présente une zone en ferrite (5) à peu près de la largeur ($b_K$).

7. Agencement selon l'une quelconque des revendications 1 à 6, **caractérisé en ce que** l'enroulement primaire est monté en série avec le condensateur ($C_2$) qui compense la chute de tension inductive à l'inductance de dispersion de la tête de transmission.

8. Agencement selon l'une quelconque des revendications 1 à 7, **caractérisé en ce que** le conducteur central (6) est relié à la fin (E) du trajet, que parcourt au maximum un usager mobile, au conducteur extérieur, c'est-à-dire au boîtier et qu'un générateur à fréquence moyenne (MFG) alimente au début du trajet le courant ($I_1$) entre le conducteur central et le boîtier.

9. Agencement selon l'une quelconque des revendications 1 à 8, **caractérisé en ce que** la longueur du trajet et de l'agencement du conducteur primaire est supérieure à 100 m.

10. Agencement selon l'une quelconque des revendications 1 à 9, **caractérisé en ce que** le circuit primaire forme une voie sans fin d'une allure au choix, fermée en tant que telle, qui permet une transmission d'énergie ininterrompue à plusieurs usagers mobiles, et **en ce qu'**aux raccordements (A, B, B', C) du circuit primaire, un réseau (8) introduit le courant d'alimentation (I, $I_1$, $I_{1'}$) fourni par le générateur à fréquence moyenne (MFG) dans des directions opposées dans le conducteur central (6) et le conducteur extérieur (7).

11. Agencement selon la revendication 10, **caractérisé en ce que** le réseau (8), pour le couplage de courants opposés et de même grandeur ($I_1$, $I_{1'}$) dans le conducteur central (6) et le conducteur extérieur (7) d'un trajet fermé en tant que tel, comprend un transformateur (T) avec deux enroulements secondaires ($W_4$, $W_5$) ayant le même nombre de spires, dont les extrémités (b, b') médianes formant un centre de tension sont reliées entre par les raccordements (B, B') du conducteur extérieur coaxial et dont les entrées (A, C) extérieures de phase opposée sont raccordées par les raccordements (A, C) au conducteur central (6).

12. Agencement selon les revendication 10 et 11, **caractérisé en ce que** les paires de lignes d'amenée raccordées respectivement aux conducteurs intérieur et extérieur d'une ou des deux extrémités (A, B), (B', C) de l'agencement de conducteur côté primaire sont guidées à passer sur des selfs de compensation ($KD_1$, $KD_2$), qui entraînent l'égalité des courants ($I_1$, $I_{1'}$) dans les conducteurs central et extérieur.

13. Agencement selon la revendication 12, **caractérisé en ce que** les lignes d'amenée vers les raccordements des conducteurs extérieurs (B, B'), avant le passage à travers les selfs de compensation ($KD_1$, $KD_2$), sont guidées sur les côtés des selfs de compensation éloignés des raccordements de conducteurs extérieurs (B, B') à un point de liaison commun (b) ou le point de liaison commun (b) est sélectivement sans potentiel, c'est-à-dire isolé, ou est relié par la prise médiane de la source à fréquence moyenne et/ou au potentiel de masse respectivement de terre.

14. Agencement selon les revendications 12 et 13, **caractérisé en ce que** le conducteur central (6) est constitué de plusieurs spires ($W_1$) et que l'égalité des courants totaux ($I_1 * W_1$) dans le conducteur central et du courant ($I_{1'}$) dans le conducteur extérieur est atteinte par le fait que le rapport du nombre d'enroulements des selfs de compensation ($KD_1$, $KD_2$) coïncide avec le nombre d'enroulements ($W_1$) du conducteur central (6).

15. Agencement selon l'une quelconque des revendications 1 à 14, **caractérisé en ce que** le réseau (8) est prévu pour rendre symétrique l'alimentation en courant à plusieurs emplacements de la voie sans fin.

16. Agencement selon l'une quelconque des revendications 1 à 15, **caractérisé en ce que**, au conducteur central (6), sont montés en série des condensateurs ($C_K$, $C_{K1}$ - $C_{K3}$) pour compenser la chute de pression inductive et sont répartis sur la longueur totale du conducteur central de façon que la compensation ait lieu en plusieurs sections avec des tensions partielles ($U_{01}$ - $U_{04}$) techniquement maîtrisables.

FIG.1
(Stand der Technik)

FIG.2
(Stand der Technik)

FIG.3

$W_2$  1  2  5  7

MFG

VB

$I_1$  6  $\phi_o$

$\frac{1}{2}I_1$

$\frac{1}{2}I_1$

7  7  7

FIG.4

$b_K$  $\phi$  6,$I_1$

$\delta_1$

$\delta_2$

$W_2$

2  5  7

$I_2$

VB

FIG.5

5  7  $\frac{1}{2}I_1$

$\delta_E$

$I_1, l_1$

$b_1$

S

$\frac{1}{2}I_1$

EP 0 799 517 B2

FIG.6

FIG.7

FIG.8

FIG.9

FIG.10

FIG. 11

FIG. 12

FIG.13

FIG.14